# EUROPEAN PATENT SPECIFICATION

(11) **EP 1 512 810 B1**
(45) Date of publication and mention of the grant of the patent: **26.11.2008**
(21) Application number: 04027384.9
(22) Date of filing: 02.09.2002
(51) Int. Cl.: E04H 4/16

(54) **Pool cleaning method and apparatus**
Schwimmbeckenreinigungsverfahren und -gerät
Appareil et procédé de nettoyage de piscine

(30) Priority: 15.10.2001 IL 14593001; 30.07.2002 US 209164
(43) Date of publication of application: 09.03.2005
(62) Divisional of application: 02019189.6
(73) Proprietor: Aqua Products Inc., Cedar Grove, NJ 07009 (US)
(72) Inventor: Porat, Joseph, Del Ray Beach, FL 33483 (US); Fridman, Igor, Netanya 42405 (IL)
(74) Representative: Hirsch & Associés

(56) References cited:
- US-A- 2 988 762
- US-A- 3 892 282
- US-A- 4 518 437

## Description

### FIELD OF THE INVENTION

The present invention relates to pool cleaning robots. More particularly it relates to apparatus and method for cleaning the bottom of a pool.

### BACKGROUND OF THE INVENTION

There are many types of automatic pool cleaners available, exhibiting various navigational abilities and ways of cleaning the bottom of a pool.

For example, in US patent No. 6,125,492 (Prowse), titled Automatic Swimming Pool Cleaning Device, there was disclosed an automatic swimming pool cleaning device, which includes a flexible cleaning member designed to contact an underwater surface of the swimming pool. A tube is coupled to the cleaning member for connecting the cleaning device to a water vacuum hose via hose adaptor. Water and pool surface contamination is drawn from underneath the cleaning member up through the tube by suction to a water filter system before being returned to the pool. A flexible valve member is mounted proximate a throat region of the tube wherein as water is drawn up through the tube a decrease in pressure in the throat region causes the valve member to flex and momentarily interrupt the flow of water. The interruption to the flow of water through the tube results in a momentary differential of ambient pressure underneath the flexible cleaning member which enables the device to move forwards incrementally along the underwater surface of the pool.

US Patent No. 6,099,658 (Porat), titled Apparatus and Method of Operation for High-Speed Swimming Pool Cleaner disclosed an apparatus and method for cleaning the bottom and vertical side walls of a swimming pool, pond or tank employing a robotic, self-propelled cleaner. The robot has a protective housing of conventional design, the cleaner being operated at a primary cleaning speed as it traverses the surfaces to be cleaned and until the cleaner housing emerges from the water along a sidewall of the pool; thereafter the cleaner operates at a secondary drive speed that is relatively slower than the primary speed and the cleaner thereafter reverses direction and descends for a pre-determined period of time at the slower secondary speed in order to permit the air entrained under the housing to escape without destabilizing the cleaner during descent. After the predetermined period of time, the cleaner resumes operation at the more rapid primary speed until the cleaner housing once again emerges from the water's surface, after which the cycle is repeated.

In US Patent No. 5,086,535 (Grossmeyer et al.) titled Machine and Method Using Graphic Data for Treating A Surface, there was disclosed a machine for treating a surface area within a boundary perimeter includes a self propelled chassis having a surface treating device mounted on it. A computing section is mounted on the chassis and a powered wheel (or each of plural powered wheels) has a motor module for receiving command signals from the computing section. A position sensor is coupled to the computing section for generating a feedback signal representing the actual position of the machine. A data loading device coacts with the computing section for transmitting data to such computing section. A data file stores graphic data developed from a graphic depiction representing the surface area to be treated as well as other data developed in other ways. The data file coacts with the computing section and transmits graphic and other data to it. The computing section is arranged for processing the data and the feedback signal and responsively generating command signals directed to each motor module. Such modules, and the motors controlled thereby, propel the machine over the surface area selected to be treated.

US Patent No. 5,569,371 (Perling) titled System For Underwater Navigation and Control of Mobile Swimming Pool Filter, disclosed an underwater navigation and control system for a swimming pool cleaning robot, having a driver, an impeller, a filter and a processor for controlling the driver and a signal-producing circuit. The system further includes a signal-detecting circuit mounted on the pool, an interface located on the ground in proximity to the pool and comprising a detector for receiving and processing data from the detecting circuit and for transmitting signals to the robot's processor. Determination of the actual robot location is performed by triangulation in which the stationary triangulation base is defined by at least two spaced-apart signal detectors and the mobile triangle apex is constituted by the signal-producing circuit carried by the robot.

US Patent No. 5,197,158 (Moini) titled Swimming Pool Cleaner, disclosed a vacuum powered automatic swimming pool cleaning device having a hollow housing supported on two pairs of device mover wheels. The housing includes a central water suction chamber in water flow communication with a water suction trough at the bottom of the housing and in water outlet communication with an external vacuum line, a gear train for driving one of the pairs of mover wheels, and pivoted directional control floats. The water suction chamber houses an axle mounted turbine wheel bearing water driven vanes with the turbine being rotated in one direction only by water flow through the chamber. The turbine axle bears a turbine power output drive gear which intermeshes with one or the other of two shift gears which in turn reversibly drive the gear train as dictated by the position of the directional control floats within the housing. The floats swing shift within the housing to shift the shift gears in response to the impact of the cleaning device on an obstruction on the pool floor or by the device impacting a vertical pool wall. The swing shift of the control floats reverses the rotation of the mover wheels and thus the direction of movement of the cleaning device on the pool floor.

US Patent No. 4,786,334 (Nystrom) titled Method of Cleaning the Bottom of a Pool, disclosed a method of cleaning the bottom of a pool with the aid of a pool cleaner. The pool cleaner travels along the bottom of the pool and collects material lying at the bottom of the pool. The pool cleaner is arranged to travel to and fro in straight, parallel paths between two opposite walls of the pool. At the walls the pool cleaner is turned by rotating a half turn so that, after turning, it will have been displaced laterally perpendicular to the initial direction of travel.

In US Patent No. 4,593,239 (Yamamoto) titled Method and Apparatus for Controlling Travel of an Automatic Guided Vehicle, there was disclosed an automatic guided vehicle detects marks located on a plurality of points along a route it travels using at least three sensors, selects the number of marks detected from each individual sensor as a reference value in accordance with the logic of majority, and stops when the reference value agrees with a predetermined value. Cumulative errors, caused by misdetection are thus avoided and, there is little cumulative error.

US Patent No. 4,700,427 (Kneppers), titled Method of Automatically Steering Self-Propelled Floor-Cleaning Machines and Floor-Cleaning Machine for Practicing the Method, disclosed a method of automatically steering a self-propelled floor-cleaning machine along a predetermined path of motion on a limited area to be worked. A sequence of path segments stored in a data memory is retrieved, and the path segments travelled by the machine. Markings are recognized by at least one sensor and converted into course-correcting control commands actuating and/or steering the machine.

US Patent No. 3,979,788 (Strausak) titled mobile machine for cleaning swimming pools, disclosed a Mobile Machine for Cleaning Swimming Pools by suction removal of sediment from the bottom of the swimming pools comprises a water turbine driving a drive wheel in such a way that the machine follows a self-steered path on the bottom of the swimming pools. The drive wheel is capable of rotating about a vertical steering axle to prevent the machine from becoming blocked at a wall or in a comer of the swimming pools.

US Patent No. 3,892,282 (Wulc), titled random motion suction cleaner, is regarded as representing the closet state of the art with respect to the subject matter of the claims and discloses a self-propelled suction cleaner for swimming pool bottoms that is adapted to move along the bottom of swimming pools. The cleaner is provided with sensors arranged on sensor arms. The cleaner moves in a straight line until one or the other of the sensors touch an obstacle such as the wall of the pool in which case the cleaner backs up in a straight line for a short distance, then a turn is made and forward motion is resumed.

It is noted that covering efficiently and quickly the bottom (and side walls) of a swimming pool is not simple a task, and various scanning algorithms (see some of the above-mentioned patents for examples) were devised to try and overcome this complex problem. Contributing to the complexity of the navigational problem is the fact that even though a robot is generally programmed to travel in straight lines from side to side and take accurate turns, it is difficult to keep it on such path and turns are hard to direct accurately. In fact a travel pattern of a pool cleaning robot is more likely to be deviated as the robot is subjected to different conditions and forces such as its own weight, the pull and weight of its electric cord, underwater currents, different friction forces due to uneven surface elevation or texture, dirt on floor, asymmetrically (or even amorphically) shaped pools etc. Consequently all navigational algorithms of pool cleaning robots depend on numerous and even repeated cycles of sweeping in order to achieve substantial coverage of the pool.

When irregularly-shaped pools are considered, some sweeping algorithms appear to be inadequate and fail to substantially cover the pool's floor.

It is the purpose of the present invention to provide a novel and improved method for navigating a pool cleaning robot on the bottom and side walls of a pool and an apparatus thereof.

Yet another purpose of the present invention to provide a method and an apparatus for navigating a pool cleaning robot that allow efficient and fast cleaning of the bottom and side walls of a pool.

Still another aim of the present invention is to provide such method and apparatus that allow high performance and coverage in cleaning irregularly shaped pools.

Other advantages and aspects of the present invention will become apparent after reading the present specification and viewing the accompanying drawings.

### BRIEF DESCRIPTION OF THE INVENTION

It is therefore thus provided, in accordance with a preferred embodiment of the present invention, a method for cleaning the bottom surface of a pool by a pool cleaning robot initially set at an arbitrary position on the floor of the pool, the method comprising:
advancing the robot to until it encounters a wall;
reversing the robot and advancing it away from the wall, allowing the robot to travel a leg of predetermined distance;
turning the robot sideways in a predetermined angle of turn;
repeating the above steps until a predetermined number of wall encounters are counted, after which the predetermined distance of the leg is altered; and
repeating the above steps whereby a substantial area of the bottom surface is cleaned by the
robot.

Furthermore, in accordance with another preferred embodiment of the present invention, the predetermined angle of turn varies in some turns during the sweeping of the bottom surface.

Furthermore, in accordance with another preferred embodiment of the present invention, the robot is initially positioned within a distance of 1 to 3 times the width of the robot from the side end of the wall.

Furthermore, in accordance with another preferred embodiment of the present invention, the angle of turn is substantially a right angle turn.

Furthermore, in accordance with another preferred embodiment of the present invention, the robot is turned in an angle of turn positioning the robot in a perpendicular direction to a facing wall.

Furthermore, in accordance with another preferred embodiment of the present invention, the alteration of the predetermined distance of the leg consists of increasing the length.

Furthermore, in accordance with another preferred embodiment of the present invention, the length of the leg is increased up to about half the length of the pool.

Furthermore, in accordance with another preferred embodiment of the present invention, the alteration of the predetermined distance of the leg consists of decreasing the length.

Furthermore, in accordance with another preferred embodiment of the present invention, the initial position of the robot at the commencing of the cleaning of the pool is about half way across the wall.

Furthermore, in accordance with another preferred embodiment of the present invention, the turn is taken constantly to the right with respect to the direction of travel of the robot.

Furthermore, in accordance with another preferred embodiment of the present invention, the turn is taken constantly to the left with respect to the direction of travel of the robot.

Furthermore, in accordance with another preferred embodiment of the present invention, the predetermined number of wall encounters counted prior to alteration of the length of the leg is 7.

Furthermore, in accordance with another preferred embodiment of the present invention, the alteration of the length of the leg is done in increments of constant lengths.

Furthermore, in accordance with another preferred embodiment of the present invention, the robot has a single drive motor and has a pump motor a powering horizontal impeller to pump water from the bottom of the pool upwards into the robot, and wherein the robot is turned by applying at least one of a plurality of predetermined number of interruptions to the power to the impeller motor thus causing the robot to acquire bias momentum directed sideways and hence move in the direction of the bias.
Furthermore, in accordance with another preferred embodiment of the present invention, the predetermined number of interruptions is between 15 to 25.

Furthermore, in accordance with another preferred embodiment of the present invention, the duration of the series of predetermined number of interruptions is in the range of about 10 to 20 seconds.

Furthermore, in accordance with another preferred embodiment of the present invention, each interruption lasts about 0.5 to 0.8 seconds.

Furthermore, in accordance with the present invention, there is provided a pool cleaning robot comprising:
a reversible motorized drive;
an impeller driven by a pump motor;
a power supply;
a processor for counting wall encounters and including a programmed algorithm for navigating and operating, the algorithm comprising the following steps:
   advancing the robot to until it encounters a wall;
   reversing the robot and advancing it away from the wall, allowing the robot to travel a leg of predetermined distance along the bottom of the pool;
   turning the robot sideways in a predetermined angle of turn;
   repeating the above steps until a predetermined number of wall encounters have been counted, after which the predetermined distance of the leg is altered; and
   repeating the above steps whereby substantial area of the floor is covered by the robot;
a controller for receiving commands from the processor and reversing the motorized drive of the robot and initiating turning of the robot upon the appropriate commands from the processor; and
a wall encounter sensor for sensing a wall encounter and sending a signal to the processor.

Furthermore, in accordance with preferred embodiment of the present invention, the wall encounter sensor comprises a proximity sensor or a collision sensor or a tilt sensor or a sonar sensor.

Furthermore, in accordance with another preferred embodiment of the present invention, the reversible motorized drive is a reversible motorized caterpillar drive.

Furthermore, in accordance with another preferred embodiment of the present invention, the robot further comprises a GPS receiver for determining its position and direction.

Furthermore, in accordance with another preferred embodiment of the present
invention, the algorithm includes inter alia applying at least one of a plurality of predetermined number of interruptions of the power to the pump motor thus causing the robot to acquire bias momentum directed sideways and hence move in the direction of the bias.

### BRIEF DESCRIPTION OF THE DRAWINGS

In order to better understand the present invention, and appreciate its practical applications, the following Figures are provided and referenced hereafter. It should be noted that the Figures are given as examples only and in no way limit the scope of the invention as defined in the appending Claims. Like components are denoted by like reference numerals.
Figure 1 illustrates the path traveled by a pool cleaning robot in accordance with a preferred embodiment of the present invention.
Figure 2a illustrates a sectional view of a pool cleaning robot in accordance with the present invention.
Figure 2b illustrates the bottom view of a pool cleaning robot in accordance with the present invention.
Figure 3 illustrates a plot of the impeller power versus time before, during and after a turn maneuver.
Figure 4 illustrates a schematic diagram of the electric features of a pool cleaning robot in accordance with the present invention.

### DETAILED DESCRIPTION OF THE INVENTION

A main aspect of the present invention is the navigation algorithm disclosed in the present invention that introduces a systematic sweep of the bottom of the pool in a predetermined manner.

In one embodiment of the invention, the pool-cleaning robot is provided with a novel and unique steering mechanism exploiting imparted changes in the angular momentum of an impeller in the robot.

The sweeping of the pool's bottom is carried out by making the pool cleaning robot follow a series of paths across the bottom of the pool, from one side of the pool to the opposite side. After each crossing the robot reverses, traveling a leg (or step) of predetermined distance back, substantially on its previous track and then turns sideways in a predetermined angle of turn and the robot moves on to reach the wall, reverse and cross from that wall to the opposite wall. Each time the robot encounters a wall it senses this event and counts the number of wall encounters. After a predetermined number of wall encounters was counted, the predetermined distance of the leg is altered and the routine is continues until the entire area of the bottom of the pool was covered.

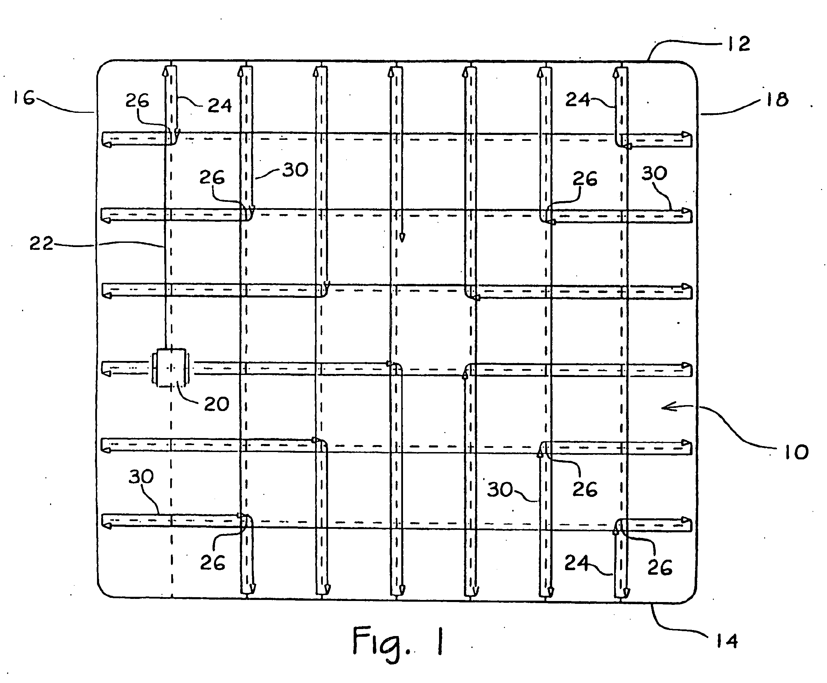

Reference is now made to Figure 1, illustrating an example of a path traveled by a pool cleaning robot in accordance with a preferred embodiment of the present invention. It is noted that the lines with the arrowheads represent the direction of travel by the robot, and in order to show clearly the direction of travel do not over lap, although in fact it is anticipated that the robot will follow its tracks on its reverse course. The dashed line represents the actual path on which the robot is supposed to travel.

A pool's rectangular floor 10 is shown, with four surrounding walls arranged in two pairs of parallel opposite walls (12, 14, 16, 18).

In a preferred embodiment of the present invention the method of systematically sweeping the pool's floor is as follows: a pool cleaning robot 20, typically having a motor-driven caterpillar drive (but other drive types are possible too), is initially set to start crossing in a straight path 22 on the pool's floor 10, commencing its trip at the side of the pool adjacent wall 14. The initial position may be chosen arbitrarily, even somewhere in the middle of the pool. In polygonal pools, such as the rectangular pool shown in Figure 1, it is recommended to position the robot initially near one side end of the wall (preferably within a distance of 1 to 3 times the width of the robot), bearing in mind the effective cleaning area covered by the robot as its pumps dirt and foliage. By "side end of the wall" it is meant one of the ends of a wall on either side, as opposed to its top and bottom ends.

The robot 20 crosses over to the other side of the pool, traveling in a substantially straight line 22 on the floor 10 until it encounters wall 12. Once the robot has encountered a wall the motor drive is reversed, and the robot is driven in substantially the opposite direction. After a leg of predetermined length 24 was traveled, the robot is turned sideways in a predetermined angle 26 (substantially at right angle in the example of Figure 1) and then travels substantially straight until a wall 16 is encountered. For polygonal pools turns it is recommended to aim at making the turn angle such that the robot then traverses perpendicular to a facing wall of the pool, but that is not a compulsory requirement.

Upon encountering the wall the drive motor of the robot is again reversed, and after the robot has traveled the leg of predetermined length 24 it is again turned sideways in a predetermined angle 26 directing the robot to a wall 18 of the pool.

After a predetermined number of wall encounters the length of the leg is altered to a new length of leg 30 (and then 32, 34), thus substantially preventing the robot from following the same path it has previously taken, hence and enhancing its coverage of the pool's floor. Preferably after alteration of the length of the leg the counter is reset and starts counting wall encounters until the same number of predetermined wall encounters was counted, upon which the length of the leg is again altered.

The alteration of the length of the leg traveled by the robot after it was reversed upon encountering a wall may consist of either increasing or decreasing the length. In the example shown in Figure 1, the leg length is increased. It is possible to set the leg length to be decreased instead of increased. In such a case the initial position of the robot at the commencing of the sweeping of the pool is preferably about half way across the wall at the side.

It is noted that if the algorithm involves increasing the length of the leg it is enough to increase it up to about half of the anticipated length of the pool, for after that any further increase would result in the robot traveling on a path previously taken. This is not an ultimate requirement as the user may decide to end the sweeping of the pool's floor by the robot at any instant. It is possible to time the robot's operation using a timer switch, thus limiting its travel in that way.

The turn may be taken in any direction (i.e. right or left), but preferably same direction of turn is taken throughout the sweeping procedure to ensure efficient coverage of the pool's floor.

For a rectangular pool as shown in Figure 1, the predetermined number of wall encounters counted prior to alteration of the length of the leg is preferably 7, for if the length of the leg is not altered after 7 wall encounters the robot may be found traveling substantially on its previous tracks following the same initial path 22.

The varying length of the leg traveled by the robot after it was reversed upon encountering a wall may be set arbitrarily. In the example exhibited in Figure 1, the length is increased at steps of constant lengths, but that is not imperative.

The predetermined angle of turn may also vary in some turns - or all of them - during the sweeping process, either in a predetermined manner (such as programmed in advance) or arbitrarily.

A pool cleaning robot in accordance with a preferred embodiment of the present invention may be any such robot adapted to perform the steering algorithm of the present invention.

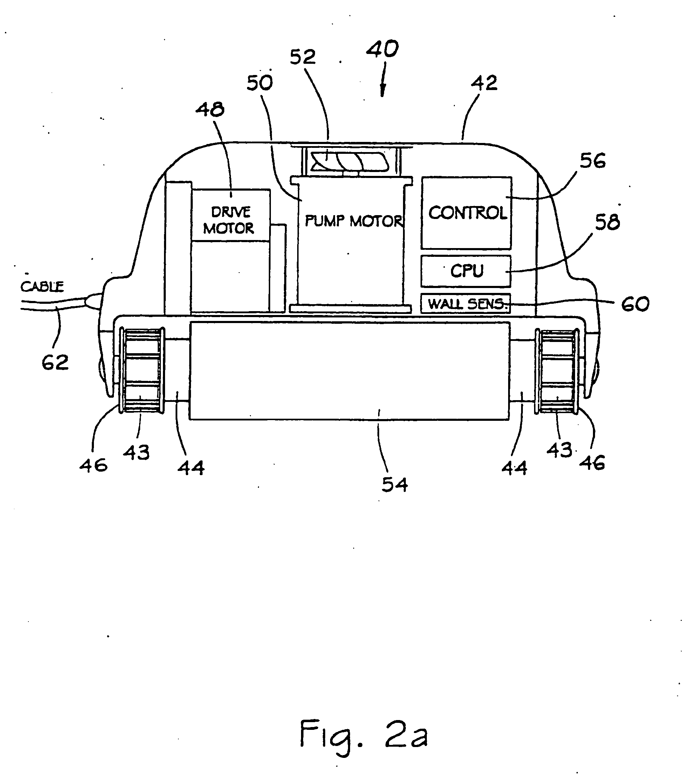

Reference is now made to Figure 2a illustrating a sectional view of a pool cleaning robot 40 in accordance with the present invention. A robot housing 42 houses a motor drive 48 for driving the axles 44 (in axle cover 54) on which ends wheels 46 are attached to the caterpillar tracks, an impeller 52 oriented horizontally (to pump water from the pool's floor upwards into the robot), driven by a pump motor 50, control unit 56, central processing unit (CPU) 58 and wall encounter sensor 60. The pumped dirt and foliage are collected inside a filter bag that is positioned inside the housing along the pump. Power cable 62 goes through the housing 42 to provide power to the robot electric components. In other preferred embodiments of the present invention no power cable is provided and instead the robot is powered by battery.

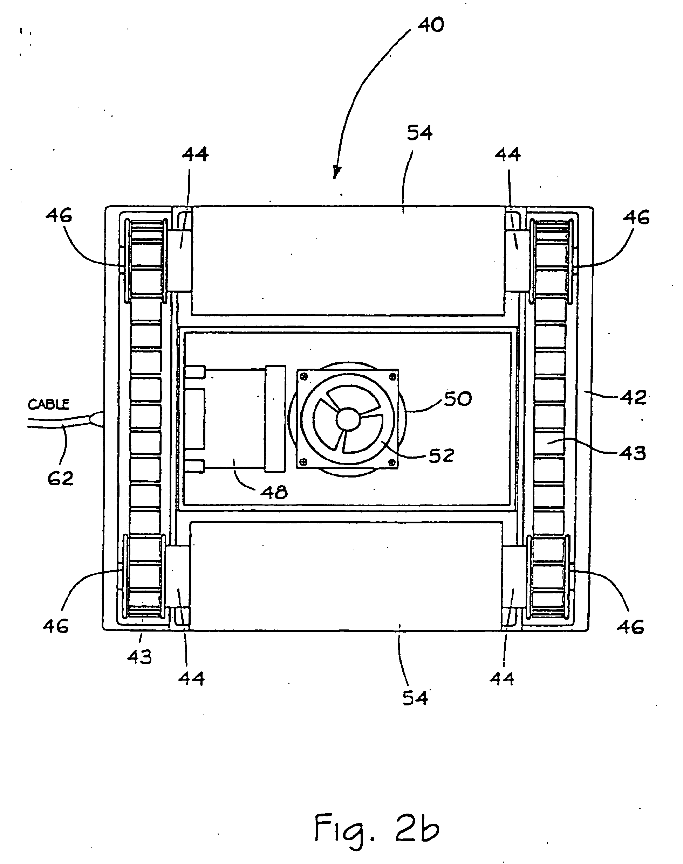

Figure 2b illustrates the bottom view of a pool cleaning robot in accordance with the present invention. Twin parallel caterpillar tracks 43 are provided, stretched over and motivated by wheels 46.

The robot shown in Figures 2a and 2b is driven by a single motor (drive motor 48). Usually pool cleaning robots targeted for small and medium sized pools are provided with a single motor drive, whereas for twin motor drive is popular in large pools cleaning robots. Single motor drive can be reversed by employing provided transmission to reverse the direction of the rotation of the wheel axles, but it cannot be used to turn the robot sideways. It takes two separate motors to maneuver sideways, as each track is operated separately, either by stopping one track and driving the other, or by pirouetting (driving tracks in opposite directions). In order to make a single motor robot turn sideways it is suggested to employ a series of intentional interrupts in the impeller rotation thus causing the robot to acquire bias momentum directed sideways and hence move in that direction. This method takes advantage of the fact that impellers are inherently biased and it was found by the inventor of the present invention that a series imparted interrupts in the impeller rotation cause the robot to acquire momentum directed sideways.

The number of interrupts - which may vary from a single interrupt to a series of interrupts, as well as their cycle and duration are empirically found for every robot, and depend on factors such as the robot weight, type, type of pump, size, weight and rotational velocity of the impeller, speed of robot when driven on its caterpillar tracks, the desired angle of turn etc.

It was found that for a pool cleaning robot whose weight is 10.5 kg, with a brushless drive motor and pump that work on DC 12 Volt, 18m floating cable and a transformer (commercially available from Tematech Ltd., Afula, Israel, under the brand name "Aquabot" type "Bravo"), in order to turn in substantially right angle, a series of impeller interrupts is applied with the following parameters: the interrupt series duration was about 10 to 20 seconds, during which a series of about 15 to 25 interrupts in the impeller's operation were administered (by switching the impeller power off and on sequentially), each interrupt lasting about 0.5 to 0.8 seconds. Again it is emphasized that these parameters are empirical and differ from robot to robot depending on its specific characteristics and features, as explained hereinabove.

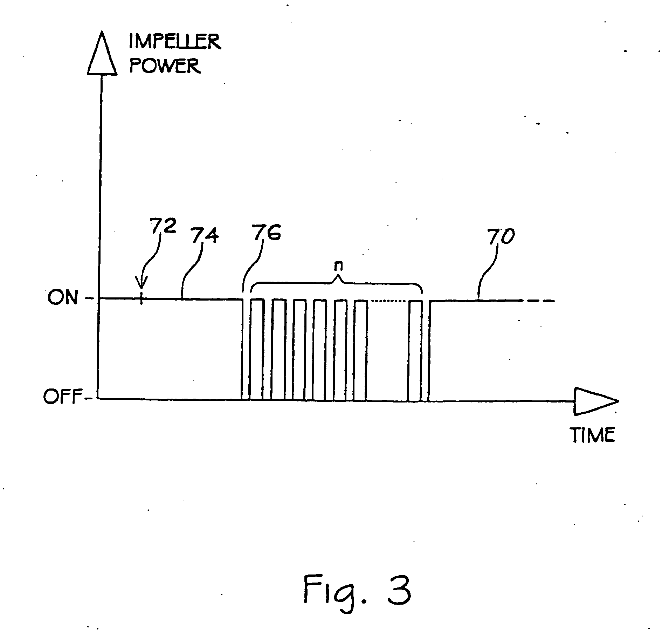

Figure 3 illustrates a plot of the impeller power versus time before, during and after a turn maneuver. The X axis represents time and the Y axis represents the power status of the impeller. Portion 70 of the plot represents the power of the impeller as the robot with its impeller power on approaches a wall. At instance 72 the robot detects wall encounter and its drive is reversed. It then travels a leg of predetermined length during time duration 74 (the length is easily determined as being the product of the robots known speed by a predetermined time duration). Once the length of the leg has been reached (instance 76) a series of n interrupts in the power supplied to the impeller are administered in predetermined cycle and duration. Once turned the power of the impeller remains on until the next turn maneuver.

It is important to note that the sweeping method of the present invention (such as the example shown in Figure 1) is independent of the navigational nature of the pool cleaning robots, and certainly not limited to single motor robots in general or to single motor robots maneuvered using the interrupted impeller rotation as disclosed herein. Other types of pool cleaning robots navigated in various navigation methods, such as GPS or others are all covered by the scope of this invention.

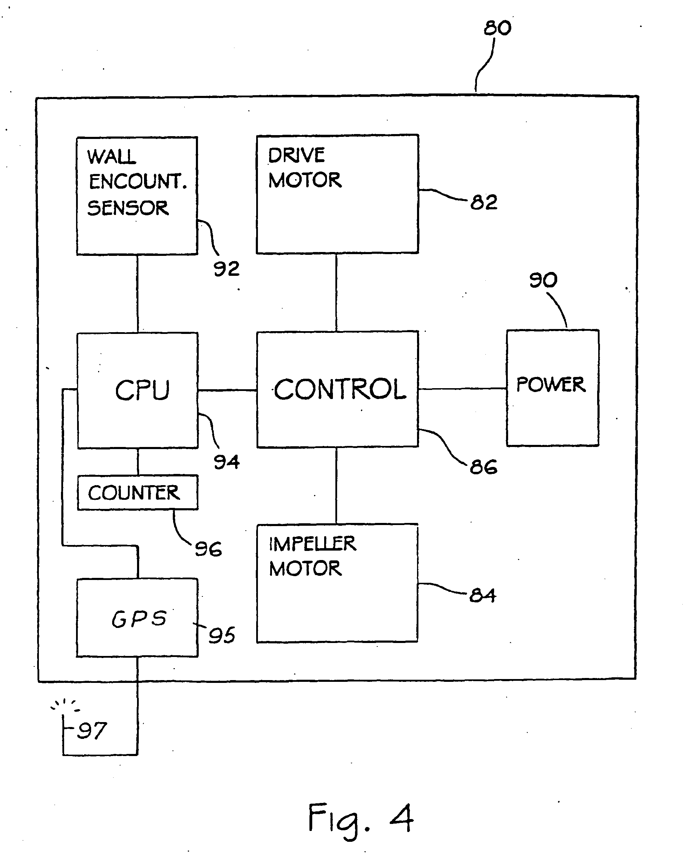

Figure 4 illustrates a schematic diagram of the electric features of a pool cleaning robot 80 in accordance with the present invention. Powered by power supply 90, either externally (through a cable) or internally (battery) the pool cleaning robot comprises a reversible drive motor 82 and impeller motor 84 independently controlled by a control unit 86. The control unit is connected to a processing unit (CPU) 94 that dictates the operation of the control and consequently of the entire robot. The robot has a wall encounter sensor 92 that senses a wall encounter and generates a signal that is received by the processing unit. It is noted that the event of encountering a wall may be sensed by a sensor provided on the robot, such as a proximity sensor or collision sensor, or sonar sensor, and the drive motor of the robot is switched to the reverse direction. For example, for that purpose a proximity sensor - an optical sensor typically operating in the infrared range - or a tilt sensor, such as mercury sensor ―a sensor actuated by a balanced tiltable mechanism that senses the tilting of the robot as it attempts to climb a wall, may be used. If a sonar sensor is used one can obtain better direction control too.

The processing unit is programmed to actuate the drive motor and impeller motor, via the control unit, in a predetermined manner following an algorithm such as explained with reference to Figure 1 and figure 3, switching the drive motor between forward and reverse modes, and applying the interrupt sequences scheme to the impeller motor.

An optional GPS receiver 95 communicating with the CPU may be incorporated in the robot to allow determining its position and direction. The GPS is provided with a floating antenna 97 or an antenna is incorporated in the power cable from the remote power supply unit.

The events of wall encounters are counted by a counter 96 incorporated with a central processing unit of the robot.

It is noted that the method and apparatus for automated pool cleaning of the present invention may be implemented on pools of any shapes, whether rectangular, polygonal, circular, oval and even irregularly shaped ones. The step of varying the length of the legs of the present invention ensures that substantially the entire pool floor be efficiently covered and thereby cleaned in a relatively short time.

The apparatus and method for pool cleaning robot of the present invention allow covering efficiently and relatively quickly the bottom of a pool of any shape, depth and size.

It should be clear that the description of the embodiments and attached Figures set forth in this specification serves only for a better understanding of the invention, without limiting its scope as covered by the following Claims.

It should also be clear that a person skilled in the art, after reading the present specification could make adjustments or amendments to the attached Figures and above described embodiments that would still be covered by the following Claims.

## Claims

1. A method for cleaning the bottom surface of a pool (10) by a pool cleaning robot (20) initially set at an arbitrary position on the bottom of the pool, the method comprising:
- advancing the robot (20) until it encounters a wall (12);
- reversing the robot (20) and advancing it away from the wall, allowing the robot to travel a leg of predetermined distance (24);
- turning the robot (20) through a predetermined angle of turn (26);
- repeating the above steps until a predetermined number of wall (16) encounters are counted, after which the predetermined distance of the leg is altered; and
- repeating the above steps, whereby a substantial area of the bottom surface is cleaned by the robot (20).

2. The method of Claim 1, wherein the predetermined angle of turn is varied in some turns during the cleaning of the bottom surface.

3. The method of Claim 1 or 2, wherein the robot is initially positioned near a side end of the wall.

4. The method of Claim 3, wherein the robot is initially positioned within a distance of 1 to 3 times the width of the robot from the side end of the wall.

5. The method of one of Claims 1 to 4, wherein the angle of turn is substantially a right angle turn.

6. The method of one of Claims 1 to 4, wherein the robot is turned in an angle of turn positioning the robot in a direction that is perpendicular to a facing wall.

7. The method of one of Claims 1 to 6, wherein the alteration of the predetermined distance of the leg consists of increasing the length of the leg.

8. The method of Claim 7, wherein the length of the leg is increased up to about half the length of the pool.

9. The method of one of Claim 1 to 6, wherein the alteration of the predetermined distance of the leg consists of decreasing the length of the leg.

10. The method of Claim 9, wherein the initial position of the robot at the commencing of the cleaning of the pool is about mid way along the wall.

11. The method of one of Claims 1 to 10, wherein the turn is taken constantly to the right with respect to the direction of travel of the robot.

12. The method of one of Claims 1 to 10, wherein the turn is taken constantly to the left with respect to the direction of travel of the robot.

13. The method of one of Claims 1 to 12, wherein the predetermined number of wall encounters counted prior to alteration of the length of the leg is 7.

14. The method of one of Claims I to 13, wherein the alteration of the length of the leg is done in increments of constant lengths.

15. The method of one of Claims 1 to 14, wherein the robot has a single drive motor(48) and has a pump motor (50) powering a horizontal impeller (52) to pump water from the bottom of the pool upwards into the robot, and wherein the robot is turned by applying at least one of a plurality of predetermined number of interruptions to the power to the impeller motor (50) thus causing the robot to acquire bias momentum directed sideways and hence move in the direction of the bias.

16. The method of Claim 15, wherein the predetermined number of interruptions is between 15 to 25.

17. The method of Claim 15 or 16, wherein the duration of the application of the predetermined number of interruptions is in the range of about 10 to 20 seconds.

18. The method of Claim 15, 16 or 17, wherein each interruption lasts about 0.5 to 0.8 seconds.

19. A pool cleaning robot (20) comprising:
- a reversible motorized drive (48);
- an impeller (52) driven by a pump motor (50);
- a power supply;
- a processor (58) for counting wall encounters and including a programmed algorithm for navigating and operating, the algorithm comprising the following steps:
- advancing the robot to until it encounters a wall;
- reversing the robot and advancing it away from the wall, allowing the robot to travel a leg of predetermined distance along the bottom of the pool;
- turning the robot sideways in a predetermined angle of turn;
- repeating the above steps until a predetermined number of wall encounters have been counted, after which the predetermined distance of the leg is altered; and
- repeating the above steps, whereby a substantial portion of the area of the bottom of the pool is covered by the robot;
- a controller (86) for receiving commands from the processor and reversing the motorized drive of the robot and initiating turning of the robot upon the appropriate commands from the processor; and
- a wall encounter sensor (92) for sensing a wall encounter and sending a signal to the processor.

20. The robot of Claim 19, wherein the wall encounter sensor (92) comprises a proximity sensor or a collision sensor or a tilt sensor or a sonar sensor.

21. The robot of Claim 19 or 20, wherein the reversible motorized drive (48) is a reversible motorized caterpillar drive.

22. The robot of Claim 19, 20 or 21, which further comprises a GPS receiver (95) for determining the position and direction of the robot.

23. The robot of Claim 19, wherein the algorithm includes, inter alia, applying at least one of a plurality of a predetermined number of interruptions of the power to the pump motor (50) thus causing the robot to acquire bias momentum directed sideways and hence move in the direction of the bias.

## Patentansprüche

1. Verfahren zum Reinigen der Bodenfläche eines Pools (10) durch einen Poolreinigungsroboter (20) der anfänglich in beliebiger Position auf den Boden des Pools gestellt wird, wobei das Verfahren Folgendes umfasst:
- Vorwärtsbewegen des Roboters (20), bis er an eine Wand (12) stößt;
- Zurückfahren und Bewegen des Roboters (20) von der Wand weg, wobei es dem Roboter ermöglicht wird, sich um eine Etappe mit vorbestimmter Strecke (24) zu bewegen;
- Umdrehen des Roboters (20) um einen vorbestimmten Drehwinkel (26);
- Wiederholen der vorstehenden Schritte, bis eine vorbestimmte Anzahl an Wandanstößen (16) gezählt ist, wonach die vorbestimmte Strecke der Etappe abgeändert wird; und
- Wiederholen der vorstehenden Schritte, wodurch ein erheblicher Bereich der Bodenfläche durch den Roboter (20) gereinigt wird.

2. Verfahren nach Anspruch 1, wobei bei manchen Drehungen während der Reinigung der Bodenfläche der vorbestimmte Drehwinkel variiert wird.

3. Verfahren nach Anspruch 1 oder 2, wobei der Roboter anfänglich in der Nähe eines Seitenendes der Wand positioniert wird.

4. Verfahren nach Anspruch 3, wobei der Roboter anfänglich innerhalb einer Strecke des 1 bis 3-fachen der Breite des Roboters vom Seitenende der Wand positioniert wird.

5. Verfahren nach einem der Ansprüche 1 bis 4, wobei der Drehwinkel im Wesentlichen eine rechtwinklige Drehung ist.

6. Verfahren nach einem der Ansprüche 1 bis 4, wobei der Roboter in einem Drehwinkel gedreht wird, in welchem der Roboter in einer Richtung positioniert wird, die senkrecht zu einer Stirnwand liegt.

7. Verfahren nach einem der Ansprüche 1 bis 6, wobei die Abänderung der vorbestimmten Strecke der Etappe aus dem Erhöhen der Länge der Etappe besteht.

8. Verfahren nach Anspruch 7, wobei die Länge der Etappe auf bis zu etwa der Hälfte der Länge des Pools erhöht wird.

9. Verfahren nach einem der Ansprüche 1 bis 6, wobei die Abänderung der vorbestimmten Strecke der Etappe aus dem Verringern der Länge der Etappe besteht.

10. Verfahren nach Anspruch 9, wobei die anfängliche Position des Roboters zu Beginn der Reinigung des Pools etwa in der Wegmitte entlang der Wand liegt.

11. Verfahren nach einem der Ansprüche 1 bis 10, wobei die Drehung in Bezug auf die Bewegungsrichtung des Roboters konstant nach rechts geführt wird.

12. Verfahren nach einem der Ansprüche 1 bis 10, wobei die Drehung in Bezug auf die Bewegungsrichtung des Roboters konstant nach links geführt wird.

13. Verfahren nach einem der Ansprüche 1 bis 12, wobei die vorbestimmte Anzahl an vor der Abänderung der Etappenlänge gezählten Wandanstößen 7 beträgt.

14. Verfahren nach einem der Ansprüche 1 bis 13, wobei die Abänderung der Etappenlänge in Schrittgrößen mit konstanten Längen durchgeführt wird.

15. Verfahren nach einem der Ansprüche 1 bis 14, wobei der Roboter einen einzelnen Antriebsmotor (48) und einen Pumpenmotor (50), der ein horizontales Laufrad (52) zum Pumpen von Wasser vom Boden des Pools nach oben in den Roboter antreibt, aufweist, und wobei der Roboter durch Anwenden von mindestens einer von mehreren vorbestimmten Unterbrechungsanzahlen an die Stromversorgung des Laufradmotors (50) gedreht wird, wodurch bewirkt wird, dass der Roboter einen seitwärts gerichteten Ausrichtungsimpuls erlangt und sich damit in die Richtung der Ausrichtung bewegt.

16. Verfahren nach Anspruch 15, wobei die vorbestimmte Anzahl an Unterbrechungen zwischen 15 und 25 liegt.

17. Verfahren nach Anspruch 15 oder 16, wobei die Dauer des Anwendens der vorbestimmten Anzahl an Unterbrechungen im Bereich von etwa 10 bis 20 Sekunden liegt.

18. Verfahren nach Anspruch 15, 16 oder 17, wobei jede Unterbrechung etwa 0,5 bis 0,8 Sekunden dauert.

19. Poolreinigungsroboter, umfassend:
- einen umschaltbaren Motorantrieb;
- ein durch einen Pumpenmotor angetriebenes Laufrad;
- eine Stromversorgung;
- einen Prozessor zum Zählen von Wandanstößen und einschließend einen programmierten Algorithmus zum Navigieren und Betreiben, wobei der Algorithmus die folgenden Schritte umfasst:
- Vorwärtsbewegen des Roboters, bis er an eine Wand stößt;
- Zurückfahren und Bewegen des Roboters (20) von der Wand weg, wobei es dem Roboter ermöglicht wird, eine Etappe mit vorbestimmter Strecke entlang des Bodens des Pools zu bewegen;
- Drehen des Roboters seitwärts in einem vorbestimmten Drehwinkel;
- Wiederholen der vorstehenden Schritte, bis eine vorbestimmte Anzahl an Wandanstößen gezählt ist, wonach die vorbestimmte Strecke der Etappe abgeändert wird; und
- Wiederholen der vorstehenden Schritte, wodurch ein erheblicher Bereich der Bodenfläche durch den Roboter abgedeckt wird;
- eine Steuerung zum Empfangen von Befehlen vom Prozessor und Umschalten des Motorantriebs des Roboters und Initiieren des Drehens des Roboters durch die entsprechenden Befehle vom Prozessor; und
- einen Wandanstoßsensor zum Erfassen eines Wandanstoßes und Senden eines Signals an den Prozessor.

20. Roboter nach Anspruch 19, wobei der Wandanstoßsensor einen Näherungssensor oder einen Aufprallsensor oder einen Kippsensor oder einen Sonarsensor umfasst.

21. Roboter nach Anspruch 19 oder 20, wobei der umschaltbare Motorantrieb ein umschaltbarer Raupenmotorantrieb ist.

22. Roboter nach Anspruch 19, 20 oder 21, der ferner einen GPS-Empfänger zum Bestimmen der Position und Richtung des Roboters umfasst.

23. Roboter nach Anspruch 19, wobei der Algorithmus u.a. das Anwenden von mindestens einer von mehreren vorbestimmten Unterbrechungsanzahlen an die Stromversorgung des Pumpenmotors einschließt, wodurch bewirkt wird, dass der Roboter einen seitwärts gerichteten Ausrichtungsimpuls erlangt und sich damit in die Richtung der Ausrichtung bewegt.

## Revendications

1. Procédé pour nettoyer la surface de fond d'une piscine (10) au moyen d'un robot de nettoyage de piscine (20) initialement disposé à une position arbitraire au fond de la piscine, le procédé comprenant les étapes consistant à :
faire avancer le robot (20) jusqu'à ce qu'il rencontre une paroi (12) ;
faire faire marche arrière au robot (20) et l'éloigner de la paroi, permettant au robot de réaliser un parcours d'une longueur prédéterminée (24) ;
faire tourner le robot (20) d'un angle de rotation (26) prédéterminé ;
répéter les étapes ci-dessus jusqu'à ce qu'un nombre prédéterminé de rencontres de paroi (16) soit compté, après quoi la longueur prédéterminée du parcours est modifiée ; et
répéter les étapes ci-dessus, moyennant quoi une surface sensible de la surface de fond est nettoyée par le robot (20).

2. Procédé selon la revendication 1, dans lequel l'angle de rotation prédéterminé est modifié sur certaines rotations pendant le nettoyage de la surface de fond.

3. Procédé selon la revendication 1 ou 2, dans lequel le robot est initialement positionné à proximité d'une extrémité latérale de la paroi.

4. Procédé selon la revendication 3, dans lequel le robot est initialement positionné à une distance représentant de 1 à 3 fois la largeur du robot par rapport à l'extrémité latérale de la paroi.

5. Procédé selon l'une des revendications 1 à 4, dans lequel l'angle de rotation est sensiblement une rotation à angle droit.

6. Procédé selon l'une des revendications 1 à 4, dans lequel le robot tourne d'un angle de rotation, positionnant le robot dans une direction qui est perpendiculaire à une paroi de face.

7. Procédé selon l'une des revendications 1 à 6, dans lequel la modification de la distance prédéterminée du parcours consiste à augmenter la longueur du parcours.

8. Procédé selon la revendication 7, dans lequel la longueur du parcours est augmentée jusqu'à environ la moitié de la longueur de la piscine.

9. Procédé selon l'une des revendications 1 à 6, dans lequel la modification de la distance prédéterminée du parcours consiste à diminuer la longueur du parcours.

10. Procédé selon la revendication 9, dans lequel la position initiale du robot au début du nettoyage de la piscine est environ à mi-chemin le long de la paroi.

11. Procédé selon l'une des revendications 1 à 10, dans lequel la rotation est effectuée de manière constante à droite par rapport à la direction de déplacement du robot.

12. Procédé selon l'une des revendications 1 à 10, dans lequel la rotation est effectuée de manière constante à gauche par rapport à la direction de déplacement du robot.

13. Procédé selon l'une des revendications 1 à 12, dans lequel le nombre prédéterminé de rencontres de paroi compté avant la modification de la longueur de la patte est de 7.

14. Procédé selon l'une des revendications 1 à 13, dans lequel la modification de la longueur du parcours est réalisée par incréments de longueurs constantes.

15. Procédé selon l'une des revendications 1 à 14, dans lequel le robot a un seul moteur d'entraînement (48) et a un moteur de pompe (50) alimentant une hélice horizontale (52) pour pomper l'eau du fond de la piscine vers le haut dans le robot, dans lequel le robot est entraîné en rotation en appliquant au moins l'une d'une pluralité d'un nombre prédéterminé d'interruptions de l'alimentation au moteur d'hélice (50), amenant ainsi le robot à acquérir une moment de sollicitation dirigée latéralement et par conséquent à se déplacer dans la direction de la sollicitation.

16. Procédé selon la revendication 15, dans lequel le nombre prédéterminé d'interruptions est compris entre 15 et 25.

17. Procédé selon la revendication 15 ou 16, dans lequel la durée d'application du nombre prédéterminé d'interruptions est de l'ordre d'environ 10 à 20 secondes.

18. Procédé selon la revendication 15, 16 ou 17, dans lequel chaque interruption dure environ 0,5 à 0,8 secondes.

19. Robot de nettoyage de piscine, comprenant :
- un entraînement motorisé réversible ;
- une hélice entraînée par un moteur de pompe ;
- un bloc d'alimentation ;
- un processeur pour compter les rencontres de paroi et comprenant un algorithme programmé pour naviguer et fonctionner, l'algorithme comprenant les étapes suivantes consistant à :
- faire avancer le robot (20) jusqu'à ce qu'il rencontre une paroi (12) ;
- faire faire marche arrière au robot (20) et l'éloigner de la paroi, permettant au robot de réaliser un parcours sur d'une longueur prédéterminée (24) ;
- faire tourner le robot (20) d'un angle de rotation (26) prédéterminé ;
- répéter les étapes ci-dessus jusqu'à ce qu'un nombre prédéterminé de rencontres de paroi (16) soit compté, après quoi la longueur prédéterminée du parcours est modifiée ; et
- répéter les étapes ci-dessus, moyennant quoi une surface sensible de la surface de fond est nettoyée par le robot (20).;
- un contrôleur pour recevoir les commandes provenant du processeur et inverser l'entraînement motorisé du robot et initier la rotation du robot selon les commandes appropriées du processeur ; et
- un capteur de rencontre de paroi pour détecter une rencontre de paroi et envoyer un signal au processeur.

20. Robot selon la revendication 19, dans lequel le capteur de rencontre de paroi comprend un capteur de proximité ou un capteur de collision ou un capteur d'inclinaison ou un capteur sonar.

21. Robot selon la revendication 19 ou 20, dans lequel l'entraînement motorisé réversible est un entraînement par chenille motorisé réversible.

22. Robot selon la revendication 19, 20 ou 21, qui comprend en outre un récepteur GPS pour déterminer la position et la direction du robot.

23. Robot selon la revendication 19, dans lequel l'algorithme comprend, entre autres, l'étape consistant à appliquer au moins l'une d'une pluralité d'un nombre prédéterminé d'interruptions de l'alimentation au moteur d'hélice (50), amenant ainsi le robot à acquérir moment de sollicitation dirigée latéralement et par conséquent à se déplacer dans la direction de la sollicitation.
